# NEUE EUROPÄISCHE PATENTSCHRIFT

(11) **EP 0 447 874 B2**
(45) Veröffentlichungstag und Bekanntmachung des Hinweises auf die Entscheidung über den Einspruch: **23.06.1999**
(45) Hinweis auf die Patenterteilung: 04.10.1995
(21) Anmeldenummer: 91103343.9
(22) Anmeldetag: 06.03.1991
(51) Int. Cl.: G01S 13/30, G01S 13/28

(54) **Signalverarbeitungsverfahren und Signalverarbeitunsanordnung für eine Pulsradaranlage**
Method and device for signal processing in a pulsed radar system
Méthode et appareil pour le traitement de signaux dans un système radar à impulsions

(30) Priorität: 07.03.1990 DE 4006981; 26.02.1991 DE 4105977
(43) Veröffentlichungstag der Anmeldung: 25.09.1991
(73) Patentinhaber: Daimler-Benz Aerospace Aktiengesellschaft, 81663 München (DE)
(72) Erfinder: Liem, Tiang-Gwan, D - 7900 Ulm (DE); Minker, Manfred , Dipl. Ing., D 7900 Ulm (DE); Aichele, Hermann, Dipl. Ing., D - 7306 Denkendorf (DE)

(56) Entgegenhaltungen:
- EP-A- 0 049 087
- EP-A- 0 064 305
- EP-A- 0 184 424
- GB-A- 2 030 416
- US-A- 3 945 011
- PROCEEDINGS IEEE/AIAA, 7TH DIGITAL AVIONICS SYSTEMS CONFERENCE, Fort Worth, Texas, 13. - 16. Oktober 1986, Seiten 469-474, IEEE, New York, US; J.W. IANNIELLO: "Airborne radar sensor and display processing"

## Beschreibung

Die Erfindung betrifft ein Signalverarbeitungsverfahren für eine Pulsradaranlage nach dem Oberbegriff des Anspruches 1 und eine Signalverarbeitungsanordnung zur Durchführung des Verfahrens nach dem Oberbegriff des Anspruches 5.

Die Anwendung der Halbleitertechnik in Sendern und aktiven Array-Antennen von Pulsradaranlagen führt zur Reduktion der Sende-Spitzenleistung im Vergleich zu Röhrengeräten Zur Abdekkung der Reichweitenforderungen werden deshalb zeitlich längere Sendeimpulse benötigt, die zur Gewährleistung guter Entfernungsauflösung intrapulsmoduliert sind und empfangsseitig mit entsprechender Filtertechnik zu kurzen Signalen komprimiert werden.

Das Pulsradar verwendet in der Regel die gleiche Antenne für Senden und Empfangen. Dabei kann bei kurzer Sendesignaldauer die geringfügige Totzone des Echoempfangs in Kauf genommen werden, die dadurch entsteht, daß für die Dauer des Sendesignals der Empfänger blockiert ist.

Mit größerer Sendeimpulsdauer wird dieser Totbereich im Nahechoempfang unzulässig groß.

Aus der EP-A-0 184 424 ist eine Pulsradaranlage bekannt, die eine Sendeimpulsfolge mit zeitlich unterschiedlich langen Sendeimpulsen benutzt. Bei dieser Sendeimpulsfolge wird zunächst ein kurzer Sendeimpuls (für den Nahbereich) und nach einer kurzen Pulspause (zum Empfang der Echosignale aus dem Nahbereich) ein langer Sendeimpuls (für den Fernbereich) ausgesandt. An diesen schließt sich eine lange Pulspause an, in der Echosignale aus dem Fernbereich empfangen werden können. Der Nahbereich wird dadurch erweitert, daß die den kurzen Sendeimpulsen entsprechenden empfangenen Echosignale so verzögert werden, daß sie in das Zeitintervall fallen, in welchem der lange Sendeimpuls ausgesandt wird und in dem ansonsten der Empfänger gesperrt wird. Außerdem wird die Dauer der kurzen Pulspause fortlaufend geändert, wodurch eine ansonsten mögliche Mehrdeutigkeit der empfangenen Echosignale vermieden wird.

Aus der EP-A-0 049 087 ist ein Pulserzeugungs- und Pulsauswerteverfahren, insbesondere für den Radarbereich, bekannt, bei welchem intrapulsmodulierte Pulse, die zu (Puls-)Gruppen zusammengefaßt sind, ausgesandt werden. Jede (Puls-)Gruppe enthält einen zeitlich kurzen Puls und einen zeitlich langen Puls, die unmittelbar aufeinanderfolgend (ohne Pulspause) ausgesandt werden und die unterschiedliche Frequenzanteile enthalten. Die in jeder (Puls-)Gruppe vorhandenen unterschiedlichen Pulse werden zur Erkennung von Zielen in unterschiedlichen Entfernungsbereichen verwendet. Die (Puls-)Gruppen werden an Zielen reflektiert. Die empfangenen Echosignale werden einem Empfänger zugeleitet, der einen zeitabhängig schaltbaren Entfernungstor-Schalter ("range-gate") besitzt. Dieser wählt für die Signalverarbeitung alternativ einen der nachgeschalteten, parallel liegenden Auswertezweige. In jedem Auswerte-zweig erfolgt eine selektive Detektion einer Art (kurz oder lang) der Pulse.

Aus der US-A-3 945 011 ist ein Radarsystem bekannt, bei dem jeweils ein zeitlich kurzer, unmodulierter Puls (für den Nahbereich) und ein dagegen langer frequenzmodulierter Puls (für den Fernbereich) ausgesandt werden. Beide Pulse sind durch ein Zeitintervall getrennt. In diesem erfolgt eine Auswertung der aus dem Nahbereich herrührenden Echosignale. Die Auswertung erfolgt selektiv mit Hilfe eines an den kurzen Puls (Nahbereich) sowie eine an den langen Puls (Fernbereich) angepaßten Auswertekanal.

Der Erfindung liegt die Aufgabe zugrunde, ein gattungsgemäßes Signalverarbeitungsverfahren anzugeben, mit dem es möglich ist, bei vorgegebener Spitzen-Sendeleistung den Erfassungsbereich einer Pulsradaranlage durch Verkleinerung der Totzone in Richtung zur Pulsradaranlage zu vergrößern.

Der Erfindung liegt weiterhin die Aufgabe zugrunde, eine Signalverarbeitungsanordnungzur Durchführung des Verfahrens anzugeben.

Diese Aufgabe wird gelöst durch die in den kennzeichnenden Teilen der Patentansprüche 1 und 5 angegebenen Merkmale. Vorteilhafte Ausgestaltungen und/oder Weiterbildungen sind den weiteren Ansprüchen entnehmbar.

Ein erster Vorteil der Erfindung besteht darin, daß die Signalauswertung weitgehend in paralleler Weise in getrennten Signalwegen erfolgt. Dadurch können die Totzeiten, d.h. die Zeiten, in denen keine Sendesignale ausgesandt werden, erheblich verringert werden.

Ein zweiter Vorteil besteht darin, daß die empfangenen Echosignale nach einem Abmischvorgang in den Videobereich (0Hz bis ungefähr 10 MHz) als ein einziges analoges Gesamtsignal vorliegen. Dieses kann mit einem einzigen analogen Filter bearbeitet werden.

Ein dritter Vorteil besteht darin, daß die Trennung des Gesamtsignales in die benötigten Einzelsignale und deren Weiterverarbeitung in digitaler Weise erfolgt. Dadurch ist eine sehr zuverlässige Signalverarbeitung möglich. Es wird z.B. ein Driften der Signale vermieden.

Ein vierter Vorteil besteht darin, daß für die Sendeimpulse für den Fern- und den Nahbereich sehr unterschiedliche Frequenzlagen und/oder Modulationsarten gewählt werden können, so daß empfangsseitig eine sehr gute Trennung der Signale möglich ist.

Bei der Erfindung wird unmittelbar nach dem langen, modulierten Sendeimpuls ein kurzer Sendeimpuls mit anderer Modulation und/oder Frequenzlage ausgesandt. Durch empfangsseitige Trennung der Echosignale nach Signalform und Frequenzlage kann durch die Öffnung des Empfängers unmittelbar nach Abstrahlung des kurzen Sendeimpulses der Nahbereich durch die Echoauswertung dieses Signaltyps abgedeckt werden, während für den übrigen Entfernungsbereich der Empfangskanal für das energiereichere lange Signal ausgewertet wird.

Es ist wichtig, daß zur Vermeidung von Übersprechen und dadurch bedingten Falschanzeigen die beiden Empfangswege eine gute Signaltrennung bezüglich der jeweils anderen Signalform bewirken und daß die Signale sendeseitig bereits durch die unterschiedliche spektrale Lage und/oder die Art ihrer Modulation oder Codierung Eigenschaften zur Selektion aufweisen.

An bei der Erfindung vorteilhaften Signalmodulationsarten für die Pulsradaranwendung sind der einfache Rechteckimpuls, die Phasencodierung einer Pulsreihe (Biphasencodierung, Polyphasencodierung) und die Frequenzmodulation (linear oder nichtlinear) zu nennen. Die Signale werden in angepaßten (Matched) Filtern erkannt und zu einem kurzen Impuls entsprechend dem Kehrwert der Bandbreite komprimiert. Bei diesem Korrelationsprozeß findet gleichzeitig auch eine Dekorrelation (Dämpfung) modulationsfremder Signale im Zeitbereich statt, die aber nicht ausreicht, um z.B. die Beeinflussung eines 13 Bit Barkercode-Kanals durch ein nichtlinear-frequenzmoduliertes Signal gleicher Frequenzlage zu vermeiden.

Es ist deshalb zweckmäßig, daß zur unterschiedlichen Modulationsart und dadurch grundsätzlich möglichen Signaltrennung durch zeitliche Korrelation bzw. Dekorrelation die oben bereits erwähnte sendeseitige Verschiebung der Frequenzlage der Signale hinzukommt, damit eine weitere Selektion über Bandfilter erfolgen kann.

Nun hat eine solche Frequenzlagenverschiebung zur Folge, daß nach eingangsseitigen Bandfiltern für die einzelnen Signale aufwendige Empfangszüge bis zur Signalauswertung vorzusehen sind. Da der Trend aus berechtigten Gründen in Richtung einer allumfassenden digitalen Verarbeitung geht, ist es sinnvoll, eine Frequenzlagenanordnung der Signale so zu wählen, daß sie bis einschließlich einer A/D-Wandlung in einem einzigen analogen Empfangszug verarbeitet werden und erst dann mit geschickten digitalen Filtertechniken spektral getrennt und anschließend digital pulskomprimiert werden.

Bei der Weiterbildung der Erfindung wurde eine Zweier- und Dreier-Kombination von Teilsignalen in verschiedener Art ihrer Frequenzlagenanordnung mit Hilfe einer Rechnersimulation untersucht, es wurden die notwendigen Filterprozesse definiert und berechnet sowie das Übersprechen des jeweils kanalfremden Signalanteils gemessen. Im Ergebnis hat sich herausgestellt, daß die Kombination eines kurzen, biphasencodierten Signals mit einem langen, linear-frequenzmodulierten Signal nach digitaler Bandfilterung und Pulskompression mit relativ geringem Aufwand zu Übersprechdämpfungen von -80 dB führt, die für den vorgesehenen Radarbetrieb sehr zufriedenstellend sind.

Die Erfindung wird im folgenden anhand eines Ausführungsbeispiels unter Bezugnahme auf schematische Zeichnungen näher erläutert. Es zeigen:
- FIG. 1: ein Blockschaltbild zur Erläuterung der Erfindung
- FIG. 2: ein beispielhaftes (Video-)Eingangssignal für eine Anordnung entpsrechend FIG. 1

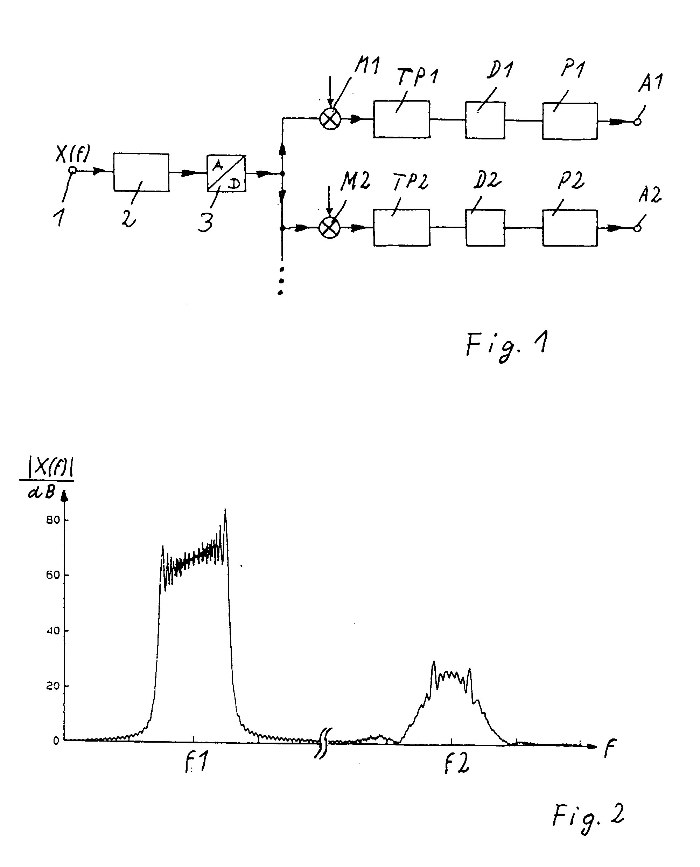

FIG. 1 zeigt ein beispielhaftes Blockschaltbild einer (Video-)Signalverarbeitungsanordnung für zwei unterschiedliche Arten von Sendeimpulsen. Es sind daher lediglich zwei Signalverarbeitungszweige dargestellt. Enthält das Sendesignal mehrere unterschiedliche Arten von Sendeimpulsen, so muß die Anordnung eine entsprechende Anzahl von Signalverarbeitungszweigen, die vorteilhafterweise gleichartig aufgebaut sind, besitzen. Diese Erweiterungsmöglichkeit ist durch Punkte dargestellt. An dem Eingang 1 der Anordnung liegt ein analoges (Video-) Gesamtsignal, das den von der Radarantenne empfangenen Echosignalen entspricht und das in die Videofrequenzlage (0 Hz bis 10 MHz) herabgemischt wird. In diesem Beispiel besteht die Impulsfolge der ausgesandten Sendeimpulse - in Abhängigkeit von der gewünschten maximalen Reichweite der Radaranlage - aus einem langen Sendeimpuls (für den Fernbereich) mit einer Pulsdauer aus dem Bereich von 100 µs bis 200 µs und einem unmittelbar (Pulspause ungefähr 1 µs) daran anschließenden kurzen Sendeimpuls (für den Nahbereich) mit einer Pulsdauer aus dem Bereich von 1 µs bis 10 µs. Der lange Sendeimpuls ist vorzugsweise als sogenannter Chirp-lmpuls ausgebildet, das heißt während der Pulsdauer erfolgt eine Frequenzmodulation, vorzugsweise eine mit linear ansteigender Frequenz. Der kurze Sendeimpuls ist vorzugsweise ebenfalls intrapulsmoduliert, z.B. entsprechend einem Biphasencode, z.B. dem Barker-Code.

FIG. 2 zeigt in der Videofrequenzlage das zugehörige Spektrum (Betragsverlauf |X(f)|) für die Kombination aus Chirp-lmpulsen mit einer ersten Mittenfrequenz f1 und Barker-Code-lmpulsen mit einer zweiten Mittenfrequenz f2. In diesem Beispiel ist f1 kleiner als f2.

Gemäß FIG. 1 wird nun ein solches analoges (Video-) Gesamtsignal einem analogen Impuls-Tiefpaßfilter 2 zugeführt. In diesem erfolgt eine Unterdrückung von störenden Spiegelfrequenzteilen, die durch den Abmischvorgang (in den Videobereich) entstanden sind. Das derart gefilterte und daher bandbegrenzte analoge Gesamtsignal wird einem Analog/Digital-Wandler 3 zugeführt, an dessen Ausgang ein digitalisiertes Gesamtsignal entsteht. Dieses wird jedem der erwähnten Einzelkanäle (Signalwege), hier beispielsweise zwei, zugeführt. In jedem Einzelkanal muß nun zunächst das zu diesem Kanal gehörende Frequenzband aus dem digitalisierten Gesamtsignal herausgefiltert werden. Dieses erfolgt in jedem Kanal vorteilhafterweise mit Hilfe eines digitalen Multiplikators M1, M2 und eines diesem nachgeschalteten digitalen Tiefpaßfilters TP1, TP2. Durch den Multiplikator, der vorzugsweise als komplexer Multiplikator ausgebildet ist, erfolgt eine frequenzmäßige Verschiebung des digitalisierten Gesamtsignales derart, daß das zu dem Einzelkanal gehörende Spektrum in Videolage liegt. Mit dem digitalen Tiefpaßfilter erfolgt außer einer Unterdrückung störender Signalanteile auch eine optimale frequenzseitige Trennung der Teilsignale (langer Impuls, kurzer Impuls). Die digitalen Tiefpaßfilter sind daher vorzugsweise als sogenannte Single-Puls-Matched-Filter (an Einzelpulse angepaßte Filter zur Optimierung des Signal-Rausch-Verhältnisses) ausgebildet. Da das (digitale) Ausgangssignal des digitalen Tiefpasses TP1 bzw. TP2 wesentlich niedrigere Frequenzanteile besitzt als das zugehörige digitale Gesamtsignal, ist es vorteilhaft für die weitere digitale Signalverarbeitung, bereits bei diesem (digitalen) Ausgangssignal die Abtastfrequenz auf einen an dieses Ausgangssignal angepaßten Wert zu erniedrigen. Diese Erniedrigung der Abtastfrequenz wird auch Decimation genannt. Es ist wichtig, daß dabei keine Information verloren geht. Diese Decimation erfolgt daher mit Hilfe an die digitalen Tiefpaßsignale angepaßten Interpolationen. Diese werden in Decimationsschaltungen D1, D2 durchgeführt. Die hier entstehenden digitalen Signale werden Pulskompressionsfiltern P1, P2 zugeführt, in denen vorteilhafterweise auch eine Nebenzipfelwichtung erfolgt. An den Ausgängen A1, A2 der Pulskompressionsfilter P1 bzw. P2 entstehen dann in digitaler Form pulsförmige Ausgangssignale, deren Intensität proportional zur Länge der unkomprimierten Signale ist. Diese Ausgangssignale besitzen vorteilhafterweise einen sehr hohen Störspannungsabstand bezüglich den Signalen des Nachbarkanales, z.B. mindestens 80 dB, und können in nicht dargestellten Anordnungen weiterverarbeitet werden, z.B. für eine Auswertung auf einem (Radar-) Bildschirm.

Die Erfindung ist nicht auf das beschriebene Ausführungsbeispiel beschränkt, sondern sinngemäß auf weitere anwendbar, beispielsweise auf eine Pulsradaranlage, bei der zusätzlich zu den beschriebenen intrapulsmodulierten Sendeimpulsen noch dagegen sehr kurze (unmodulierte) Einzelimpulse ausgesandt werden. In einem solchen Fall ist lediglich ein weiterer Einzelkanal erforderlich. Dieser entspricht im wesentlichen den beschriebenen jedoch mit dem Unterschied, daß lediglich die digitalen Filter TP, P an die Form der Einzelimpulse angepaßt werden müssen.

Es ist vorteilhaft, die Sendersignalspektren möglichst schmal zu gestalten, um den benötigten Frequenzbereich für die Anordnung der Kanäle gering zu halten und eine Überlappung der Spektren zu vermeiden, damit eine gute Selektion möglich bleibt. So kann z. B. die Phasenänderung beim biphasencodierten Signal in linearer Weise über einen verträglichen Zeitbereich erfolgen, anstatt einer abrupten Umtastung. Dadurch entsteht eine erhebliche Reduktion der spektralen Ausdehnung.

## Patentansprüche

1. Signalverarbeitungsverfahren für eine Pulsradaranlage zumindest bestehend aus
- einer Sende- und Empfangsantenne,
- mindestens einem an die Sende- und Empfangsantenne gekoppelten Impulsgenerator zur Erzeugung eines zeitlich langen, intrapulsmodulierten Sendeimpulses für den Fernbereich, und eines an den langen Sendeimpuls sich zeitlich unmittelbar anschließenden zeitlich kurzen intrapulsmodulierten Sendeimpulses für den Nahbereich, wobei sich der lange und der kurze Sendeimpuls durch eine unterschiedliche Frequenzlage unterscheiden,
- einer an die Sende- und Empfangsantenne gekoppelten Empfangseinrichtung zur Auswertung der den Sendeimpulsen entsprechenden Echoimpulse,
- wobei die empfangenen Echoimpulse zunächst in einen niedrigeren Frequenzbereich umgesetzt werden und
- dann die Echosignale für den Nah- sowie den Fernbereich getrennt und anschließend in unterschiedlichen Signalwegen getrennt ausgewertet werden,
dadurch gekennzeichnet,
- daß die empfangenen Echosignale herabgemischt werden in eine Videofrequenzlage, so daß in einem einzigen Kanal ein einziges analoges Gesamtsignal (X(f)) entsteht,
- daß das analoge Gesamtsignal (X(f)) einer analogen Filterung (2), bei der Spiegelfrequenzanteile unterdrückt werden, zugeführt wird, so daß nach der Filterung (2) ein bandbegrenztes analoges Gesamtsignal entsteht,
- daß das analoge Gesamtsignal in einem Analog/Digital-Wandler (3) in ein digitales Gesamtsignal umgewandelt wird,
- daß das digitale Gesamtsignal an mindestens zwei parallel liegende Einzelkanäle, welche dem langen sowie dem kurzen Sendeimpuls zugeordnet werden, angelegt wird und
- daß in jedem der Einzelkanäle das digitale Gesamtsignal durch eine komplexe Multiplikation (M1, M2) in eine Tiefpaßlage verschoben wird, in der eine an die zu detektierende Sendeimpulsart angepaßte digitale Filterung (TP1, TP2) sowie eine Pulskompression (P1, P2) vorgenommen wird.

2. Signalverarbeitungsverfahren nach Anspruch 1, dadurch gekennzeichnet, daß der lange Sendeimpuls ein frequenzmoduliertes Signal mit einer sich monoton ändernden Frequenz enthält und daß für den kurzen Sendeimpuls ein phasencodiertes Signal verwendet wird.

3. Signalverarbeitungsverfahren nach Anspruch 1 oder 2, dadurch gekennzeichnet, daß der lange Sendeimpuls ein frequenzmoduliertes Signal mit einer linear ansteigenden Frequenz enthält und daß für den kurzen Sendeimpuls ein entsprechend dem Barker-Code phasencodiertes Signal verwendet wird.

4. Signalverarbeitungsverfahren nach einem der vorherigen Ansprüche, dadurch gekennzeichnet, daß bei dem langen frequenzmodulierten Sendeimpuls zusätzlich eine Amplitudenmodulation durchgeführt wird, derart, daß die Amplitude in der zeitlichen Mitte des langen Sendeimpulses einen Maximalwert besitzt.

5. Signalverarbeitungsanordnung zur Durchführung des Verfahrens nach Anspruch 1, zumindest bestehend aus
- einer Sende- und Empfangsantenne,
- mindestens einem an die Sende- und Empfangsantenne gekoppelten Impulsgenerator zur Erzeugung eines zeitlich langen, intrapulsmodulierten Sendeimpulses für den Fernbereich, und eines an den langen Sendeimpuls sich zeitlich unmittelbar anschließenden zeitlich kurzen intrapulsmodulierten Sendeimpulses für den Nahbereich, wobei sich der lange und der kurze Sendeimpuls durch eine unterschiedliche Frequenzlage unterscheiden,
- einer an die Sende- und Empfangsantenne gekoppelten Empfangseinrichtung zur Auswertung der den Sendeimpulsen entsprechenden Echoimpulse,
- wobei die empfangenen Echoimpulse zunächst in einen niedrigeren Frequenzbereich umgesetzt werden,
dadurch gekennzeichnet,
- daß die Anordnung Mittel zur Herabmischung der empfangenen Echosignale in eine Videofrequenzlage aufweist,
- daß ein analoges Impuls-Tiefpaßfilter (2), in dem eine Unterdrückung von störenden Spiegelfrequenzanteilen der in den Videobereich herabgemischten Echoimpulse (X(f)) vorgenommen wird, vorhanden ist,
- daß dem Impuls-Tiefpaßfilter (2) ein Analog/Digital-Wandler (3), an dessen Ausgang ein digitales Gesamtsignal entsteht, nachgeschaltet ist,
- daß an den Analog/Digital-Wandler (3) die parallel geschalteten Eingänge von mindestens zwei Einzelkanälen angeschlossen sind,
- daß in jedem Einzelkanal eine digitale Ausfilterung des zu dem Einzelkanal gehörenden Frequenzbandes aus dem digitalen Gesamtsignal dadurch erfolgt,
- daß in jedem Einzelkanal ein Multiplikator (M1, M2), in welchem das digitale Gesamtsignal in eine Tiefpaßlage verschoben wird, vorhanden ist,
- daß an dem Ausgang des Multiplikators (M1, M2) ein digitaler Tiefpaß (TP1, TP2), in dem zusätzlich eine Matched-Filterung vorgenommen wird, angeschlossen ist, und
- daß jedem digitalen Tiefpaß (TP1, TP2) ein Pulskompressionsfilter (P1, P2) nachgeschaltet ist.

6. Signalverarbeitungsanordnung nach Anspruch 5, dadurch gekennzeichnet, daß mindestens ein Multiplikator (M1, M2) für eine komplexe Multiplikation des digitalen Gesamtsignales ausgebildet ist.

7. Signalverarbeitungsanordnung nach Anspruch 5 oder 6, dadurch gekennzeichnet, daß in mindestens einem Einzelkanal eine Decimationsschaltung (D1, D2) vorhanden ist, die eine Erniedrigung der Abtastfrequenz des digitalen Ausgangssignales des digitalen Tiefpasses (TP1, TP2) ermöglicht.

## Claims

1. Signal-processing method for a pulse radar installation consisting of at least one of
- a transmitting and receiving aerial,
- at least one pulse generator, which is coupled to the transmitting and receiving aerial, for the production of an intrapulse-modulated transmitted pulse, which is long in time, for the distant range and an intrapulse-modulated transmitted pulse, which is short in time and follows the long transmitted pulse directly in time, for the close range, wherein the long and short transmitted pulse differ by a different frequency position,
- a receiving equipment, which is coupled to the transmitting and receiving aerial, for the evaluation of the echo pulses corresponding to the transmitted pulses,
- wherein the received echo pulses are initially translated into a lower frequency range and
- the echo signals are then separated for the close and the distant range and subsequently evaluated separately in different signal paths,
characterised thereby
- that the received echo signals are mixed down into a video-frequency position, so that a single analog total signal (X(f)) arises in a single channel,
- that the analog total signal (X(f)) is fed to an anlog filtering (2) at which mirror frequency components are suppressed, so that a band-limited analog total signal arises after the filtering (2),
- that the analog total signal is converted in an analog-to-digital converter (3) into a digital total signal,
- that the digital total signal is applied to at least two parallel individual channels which are associated with the long as well as the short transmitted pulse, and
- that the digital total signal is shifted in each of the individual channels by a complex multiplication (M1, M2) into a low pass position, in which a digital filtering (TP1, TP2), which is adapted to the kind of transmitted pulse to be detected, as well as a pulse compression are undertaken.

2. Signal-processing method according to claim 1, characterised thereby, that the long transmitted pulse contains a frequency-modulated signal with a monotically changing frequency and that a pulse-coded signal is used for the short transmitted pulse.

3. Signal-processing method according to claim 1 or 2, characterised thereby, that the long transmitted pulse contains a frequency-modulated signal with a linearly rising frequency and that a signal, which is phase-coded according to the Barker code, is used for the short transmitted pulse.

4. Signal-processing method according to one of the preceding claims, characterised thereby, that an amplitude modulation is carried out in addition for the long frequency-modulated transmitted pulse in such a manner that the amplitude has a maximum value in the temporal centre of the long transmitted pulse.

5. Signal-processing arrangement for the performance of the method according to claim 1 and consisting of at least one of
- a transmitting and receiving aerial,
- at least one pulse generator, which is coupled to the transmitting and receiving aerial, for the production of an intrapulse-modulated transmitted pulse, which is long in time, for the distant range and an intrapulse-modulated transmitted pulse, which is short in time and follows the long transmitted pulse directly in time, for the close range, wherein the long and short transmitted pulse differ by a different frequency position,
- a receiving equipment, which is coupled to the transmitting and receiving aerial, for the evaluation of the echo pulses corresponding to the transmitted pulses,
- wherein the received echo pulses are initially translated into a lower frequency range,
characterised thereby,
- that the arrangement comprises means for mixing the received echo signals down into a video-frequency position,
- that an analog low-pass filter (2) is present, in which a suppression of interfering image-frequency components of the echo pulses (X(f)) mixed down into the video range is undertaken,
- that an analog-to-digital converter (3), at the output of which a digital total signal arises, is connected behind the low-pass pulse filter (2),
- that the parallelly connected inputs of at least two individual channels are connected to the analog-to-digital converter (3),
- that a digital filtering of the frequency band belonging to an individual channel out of the digital total signal takes place in each individual channel thereby,
- that a multiplier (M1, M2), in which the digital total signal is shifted into a low-pass position, is present in each individual channel,
- that a digital low-pass filter (TP1, TP2), in which a matched filtering is performed in addition, is connected to the output of the multiplier (M1, M2) and
- that a pulse compression filter (P1, P2) is connected behind each digital low-pass filter digital low-pass filter (TP1, TP2).

6. Signal-processing arrangement according to claim 5, characterised thereby, that at least one multiplier (Ml, M2) is constructed for a complex multiplication of the digital total signal.

7. Signal-processing arrangement according to claim 5 or 6, characterised thereby, a decimation circuit (D1, D2), which enables a lowering of the scanning frequency of the digital output signal of the digital low-pass filter (TP1, TP2), is present in at least one individual channel.

## Revendications

1. Procédé de traitement de signal pour une installation de radar pulsé constituée au moins :
- d'une antenne d'émission et de réception,
- d'au moins un générateur d'impulsions couplé à l'antenne d'émission et de réception, pour l'engendrement d'une impulsion d'émission, longue dans le temps, modulée de façon intrapulsée, pour la région éloignée, et d'une impulsion d'émission, modulée de façon intrapulsée, courte dans le temps, se raccordant directement dans le temps à l'impulsion d'émission longue, pour la région proche, l'impulsion d'émission longue et l'impulsion d'émission courte se différenciant par une position en fréquence différente,
- d'un agencement de réception couplé à l'antenne d'émission et de réception, pour l'évaluation des impulsions d'écho correspondant aux impulsions d'émission,
- les impulsions d'écho reçues étant converties tout d'abord dans une plage de fréquences plus faible, et
- les signaux d'écho pour la région proche ainsi que la région éloignée étant alors séparés et, consécutivement étant évalués, séparés, dans des trajets de signal différents,
caractérisé en ce,
- que les signaux d'écho reçus sont abaissés par mélange dans une position en fréquence vidéo, de sorte qu'un signal total analogique (X(f)) unique prend naissance dans un seul canal,
- que le signal total analogique (X(f)) est envoyé à une filtration analogique (2) lors de laquelle des quote-parts de fréquence de miroir sont supprimées, de sorte qu'un signal total analogique limité au point de vue bande prend naissance après la filtration (2),
- que le signal total analogique est converti, dans un convertisseur (3) analogique/numérique, en un signal total numérique,
- que le signal total numérique est appliqué à au moins deux canaux individuels se trouvant parallèles, lesquels sont associés à l'impulsion d'émission longue ainsi qu'à l'impulsion d'émission courte, et
- que dans chacun des canaux individuels, le signal total numérique est décalé par une multiplication (M1, M2) complexe dans une position passe-bas, dans laquelle, une filtration (TP1, TP2) numérique adaptée au type d'impulsion d'émission à détecter, ainsi qu'une compression d'impulsions (P1, P2), sont effectuées.

2. Procédé de traitement de signal selon la revendication 1, caractérisé en ce que l'impulsion d'émission longue contient un signal modulé en fréquence, avec une fréquence se modifiant de façon monotone, et en ce qu'un signal codé au point de vue phase est employé pour l'impulsion d'émission courte.

3. Procédé de traitement de signal selon la revendication 1 ou la revendication 2, caractérisé en ce que l'impulsion d'émission longue contient un signal modulé en fréquence, avec une fréquence croissant linéairement, et en ce qu'un signal codé au point de vue phase, correspondant au code de Barker, est employé pour l'impulsion d'émission courte.

4. Procédé de traitement de signal selon une des précédentes revendications, caractérisé en ce que, lors de l'impulsion d'émission modulée en fréquence longue, en supplément, une modulation d'amplitude est exécutée de telle sorte, que l'amplitude possède une valeur maximale dans le milieu dans le temps de l'impulsion d'émission longue.

5. Agencement de traitement de signal pour la mise en oeuvre du procédé selon la revendication 1, consistant au moins en :
- une antenne d'émission et de réception,
- au moins un générateur d'impulsions couplé à l'antenne d'émission et de réception, pour l'engendrement d'une impulsion d'émission, modulée de façon intrapulsée, longue dans le temps, pour la région éloignée, et d'une impulsion d'émission, modulée de façon intrapulsée, courte dans le temps, se raccordant directement dans le temps à l'impulsion d'émission longue, pour la région proche, l'impulsion d'émission longue et l'impulsion d'émission courte se différenciant par une position en fréquence différente,
- d'un agencement de réception couplé à l'antenne d'émission et de réception, pour l'évaluation des impulsions d'écho correspondant aux impulsions d'émission,
- les impulsions d'écho reçues étant tout d'abord converties dans une plage de fréquences plus faibles,
- caractérisé en ce
- que l'agencement présente des moyens pour l'abaissement par mélange des signaux d'écho reçus dans une position en fréquence vidéo,
- qu'un filtre d'impulsion passe-bas (2) analogique, dans lequel une suppression de quote-part de fréquence de miroir, perturbatrice des impulsions d'écho (X(f)), abaissée par mélange dans la plage vidéo, est effectuée, est présent,
- qu'au filtre d'impulsion passe-bas (2), est mis en circuit en aval un convertisseur analogique/numérique (3), à la sortie duquel un signal total numérique prend naissance,
- qu'au convertisseur analogique/numérique (3), sont raccordées les entrées, mises en circuit en parallèle, d'au moins deux canaux individuels,
- que dans chaque canal individuel, une extraction par filtration numérique de la bande de fréquence appartenant au canal individuel, hors du signal total numérique, a lieu grâce à ce,
- que dans chaque canal individuel, un multiplicateur (M1, M2), dans lequel le signal total numérique est décalé dans une position passe-bas, est présent,
- qu'à la sortie du multiplicateur (M1, M2), est raccordé un filtre passe-bas (TP1, TP2) numérique, dans lequel, de façon supplémentaire, une filtration "matched" est exécutée, et
- qu'à chaque filtre passe-bas (TP1, TP2) numérique, un filtre de compression d'impulsion (P1, P2) est mis en circuit en aval.

6. Agencement de traitement de signal selon la revendication 5, caractérisé en ce qu'au moins un multiplicateur (M1, M2) est constitué pour une multiplication complexe du signal total numérique.

7. Agencement de traitement de signal selon la revendication 5 ou la revendication 6, caractérisé en ce que, dans au moins un canal individuel, un circuit de décimation (D1, D2) est présent, qui rend possible un abaissement de la fréquence d'exploration du signal de sortie numérique du filtre passe-bas (TP1, TP2).
